Europäisches Patentamt

European Patent Office

Office européen des brevets

(11) Veröffentlichungsnummer: **0 470 605 A1**

## (12) EUROPÄISCHE PATENTANMELDUNG

(21) Anmeldenummer: **91113303.1**

(22) Anmeldetag: **08.08.91**

(51) Int. Cl.⁵: **F16L 11/08**, F16L 11/12, B32B 27/18

(30) Priorität: **09.08.90 DE 4025300**

(43) Veröffentlichungstag der Anmeldung:
**12.02.92 Patentblatt 92/07**

(84) Benannte Vertragsstaaten:
**ES FR GB IT SE**

(71) Anmelder: **EMS-INVENTA AG**
**Selnaustrasse 16**
**CH-8001 Zürich(CH)**

(72) Erfinder: **Kerschbaumer, Franz, Dr. rer. nat.**
**Masanserstrasse 147**
**CH-7000 Chur(CH)**

(54) **Längenstabile Polyamidrohrleitungen mit glasfaserverstärkter Mittelschicht.**

㊼ Die Erfindung beschreibt eine kälteschlagzähe und längenstabile Polyamidrohrleitung für Kraftfahrzeuge, die kurzzeitig thermisch überlastbar ist und die aus mindestens drei Schichten aus miteinander verträglichen Polyamidtypen besteht. Die erfindungsgemässe Polyamidrohrleitung weist ferner bevorzugt eine Innen- und eine Aussenschicht aus schlagzähmodifiziertem Polyamid mit oder ohne Weichmachergehalt und eine glasfaserverstärkte Schicht in der Mitte der Rohrwandung aus schlagzähmodifikatorfreiem oder schlagzähmodifiziertem Homopolyamid, Copolyamid oder deren Blends auf.

EP 0 470 605 A1

EP 0 470 605 A1

Die Erfindung betrifft eine kälteschlagzähe und längenstabile Polyamidrohrleitung für den Einsatz in Kraftfahrzeugen, insbesondere eine Kraftstoffleitung, die kurzzeitig thermisch belastbar ist.

Seit langer Zeit werden in Kraftfahrzeugen Kraftstoffleitungen, sogenannte Monorohre, die aus einer einzigen homogenen Schicht aus Polyamid 11 oder 12 bestehen, eingebaut.

Der wesentliche Nachteil solcher Rohrleitungen liegt im beträchtlichen Aufnahmevermögen der Polymeren für einzelne Bestandteile der Kraftstoffe, was zu Quellvorgängen und somit zu Längenänderungen in den Wandungen bzw. Wandschichten der Rohrleitungen führt. Dabei wirkt sich ein unterschiedliches Quellen in verschiedenen Wandungsteilen besonders nachteilig aus.

Ein weiterer Nachteil solcher Rohrleitungen besteht darin, dass eine beträchtliche Permeation der gebräuchlichen Kraftstoffe durch die Wandungen solcher Monorohrleitungen in Kauf genommen werden muss, die im Hinblick auf die in den letzten Jahren aufgekommenen Umweltschutz- und Sicherheitsüberlegungen unzumutbar hoch ist.

Es wurden deshalb Entwicklungen durchgeführt, um die aus einer einzigen homogenen Schicht Polyamid 11 oder 12 bestehenden Monorohre zu verbessern. Eine Möglichkeit besteht in dem Übergang zu Mehrschichtrohren aus Polymeren gleichen oder unterschiedlichen Typs.

Aus der DE 35 10 395 A1 ist eine Kraftstoffleitung bekannt, bei der Ethylen/Vinylalkohol-Copolymere mit Polyamid 11- oder 12-Schichten verbunden werden. Die Haftung zwischen diesen Schichten ist jedoch so gering, dass sie leicht delaminieren. An den delaminierten Rohrenden können aggressive Chemikalien, wie Streusalz, zwischen die Schichten eindringen. Zudem ist die Haftung an Fittingen mit Dornprofilen stark herabgesetzt. Ausserdem ist die Kälteschlagzähigkeit solcher Rohre so niedrig, dass sie Kälteschlagtests gemäss ISO 7628, DIN 73 378 und SAE J 4844d nicht bestehen können, weil die ausserordentlich brüchige Polyethylen/Vinylalkohol-Schicht in der Rohrleitungswand nach innen verlegt worden ist.

Weiterhin ist aus der DE 38 27 092 C1 eine Kraftstoffleitung bekannt, bei der thermoplastische Polyesterelastomere mit Polyamid 6 und einer Polyethylen/Vinylalkohol-Innenschicht verbunden sind. Auch in diesem Fall besteht zwischen den Schichten ebenfalls nur eine geringe Haftung, so dass auch in diesem Fall die vorstehend beschriebenen Nachteile gegeben sind.

Schliesslich ist aus der DE 38 21 723 C1 eine durch Koextrusion hergestellte, mehrschichtige Kraftfahrzeugleitung aus Kunststoff bekannt, bei der das äussere Rohr aus Polyamid besteht, auf dessen Innenseite eine dünne Beschichtung aus einem Polyolefin angebracht ist. Die Polyolefin-Beschichtung weist ihrerseits rohrinnenseitig eine geschlossene Schutzschicht aus Polyamid auf. Diese bekannte Kraftfahrzeugrohrleitung aus Kunststoff weist aufgrund ihrer Polyolefinkomponente nur eine geringe thermische Belastbarkeit und eine geringe Längenstabilität auf.

Aufgabe der Erfindung ist deshalb, eine längenstabile Polyamidrohrleitung für den Einsatz in Kraftfahrzeugen, bevorzugt als Kraftstoffleitung, vorzuschlagen, die eine für die heutigen Umweltschutz- und Sicherheitsbestimmungen ausreichend geringe Permeation für alle gebräuchlichen Kraftstoffe zeigt, ohne die vorstehend geschilderten Nachteile aufzuweisen.

Die Erfindung sieht zur Lösung dieser Aufgabe bei einer kälteschlagzähen und längenstabilen Polyamidrohrleitung für den Einsatz in Kraftfahrzeugen, insbesondere Kraftstoffleitungen, die kurzzeitig thermisch überlastbar ist, vor, dass sie aus mindestens drei Schichten miteinander verträglicher Polyamidtypen besteht, wobei mindestens eine Schicht mit Glasfasern verstärkt ist. Weitere Ausgestaltungen der Erfindung sind in den Unteransprüchen angegeben.

Eine erfindungsgemässe Kraftstoffleitung weist eine auch für die heutigen Umweltschutz- und Sicherheitsbestimmungen ausreichende Permeationsbarriere auf, ist laminationsfrei, längenstabil und mit den in einem Motorraum von Kraftfahrzeugen üblicherweise auftretenden Temperaturen kurzzeitig überlastbar. Ausserdem ist sie kostengünstig in der Herstellung.

Bekannte Monorohre bestehen die Berstdruckprüfung bereits bei 170°C nicht mehr. Dagegen halten erfindungsgemässe mehrschichtige Rohrleitungen einem Berstdruck von 7 bar selbst bei 180°C kurzzeitig, d.h. 1 bis 2 Stunden stand. Dies hat eine erhebliche Bedeutung für die Sicherheit von Kraftstoffleitungen in Fällen, in denen sich der Motor kurzzeitig überhitzt, beispielsweise wenn das Kühlsystem aufgrund eines Defektes zu kochen beginnt.

Es wurde überraschenderweise gefunden, dass die Längenstabilität einer mehrschichtigen Polyamidrohrleitung sehr hoch ist, wenn mindestens eine der Polymerschichten verstärkt ist, z.B. mit Glasfasern. Überraschenderweise wurde hierbei gefunden, dass es genügt, die relativ dünne Mittelschicht mit Glasfasern zu verstärken, um die Längenstabilität zu garantieren.

Weiterhin wurde überraschenderweise gefunden, dass Längenstabilität einer mehrschichtigen Polyamidrohrleitung ebenfalls sehr gut ist, wenn die in der Mitte liegende Schicht neben der Glasfaserverstärkung noch Schlagzähmodifikatoren enthält. Der Zusatz von sowohl Schlagzähmodifikatoren als auch von Glasfasern gewährleistet ein gutes Bruchdehnungsverhalten bei gleichzeitiger Längenstabilität.

2

Ebenfalls wurde gefunden, dass folgende modifizierte oder unmodifizierte Polyamidtypen, die Weichmacher enthalten können, sich als Rohrschichtmaterialien eignen: Polyamid 11, 12, 12.12, 6, 6.6, Polyamidelastormer auf Basis von Polyamid 12 und teilaromatische Polyamide, wobei die drei letztgenannten Polyamidtypen die erstgenannten in der Barrierewirkung gegen die aromatischen, meist toxischen Bestandteile der Kraftstoffe übertreffen und daher für die Verwendung als Barriereschichten in Kraftstoffleitungen besonders bevorzugt sind.

Ein glasfaserverstärktes, schlagzähmodifiziertes oder schlagzähmodifikatorfreies Polyamid ist mit dem gleichen, aber unverstärkten, schlagzähmodifizierten Polyamidtyp verträglich. Dies gilt auch für andere Schichtmaterialkombinationen, wie z.B. Polyamid 6.6 mit Polyamid 6 einerseits und Polyamid 11 oder 12 andererseits sowie Polyamid 6.6 mit Blends aus Copolyamiden und Polyamidelastomeren, bevorzugt Polyetheresteramid auf Basis der Monomeren des Polyamids 11 oder 12, wobei sich für die genannten Blends besonders Co-polyamide aus den Monomeren mit 6, 11 oder 12 C-Atomen eignen. Daher konnte an den erfindungsgemässen Rohrleitungen aus solchen Polyamidschichten keine Delaminierung beobachtet werden.

Erfindungsgemäss werden deshalb mehrschichtige Polyamidrohrleitungen vorgeschlagen, deren Aussenschicht aus schlagzähmodifizierten Polyamidtypen, die Weichmacher enthalten können und deren glasfaserverstärkte Mittelschicht aus schlagzähmodifikatorfreiem oder schlagzähmodifizierten Polyamid, bevorzugt aus Polyamid 6, 12 oder 6.6 bestehen.

Die glasfaserverstärkte Mittelschicht solcher Rohrleitungen besteht bevorzugt aus Polyamid 6 oder 12, das in besonders bevorzugter Weise ebenfalls schlagzähmodifiziert sein kann.

Als Schlagzähmodifikatoren werden hierbei funktionalisierte Homopolyolefine oder Copolyolefine eingesetzt. Der Zusatz dieser Schlagzähmdofikatoren liegt bei 5 bis 30 %, der der Glasfasern bei 15 bis 50 %, wobei das Verhältnis der beiden Zusatzstoffe entsprechend dem Anforderungsprofil angepasst werden kann.

Bevorzugt sind Kombinationen, die innen und aussen aus schlagzähmodifiziertem Polyamid 6 oder schlagzähmodifiziertem Polyamid 12 bestehen. Dabei hat eine weitere bevorzugte Ausführungsform in Innen- und Aussenschicht etwa die gleiche Schichtdicke, die in der Praxis zwischen 0,2 bis 1,0 mm liegt. Für die glasfaserverstärkten Mittelschichten genügen Dicken von 5 bis 25 % der Gesamtwandstärke. Damit sind für die glasfaserverstärkte Mittelschicht Dicken von 0,1 bis 0,5 mm besonders bevorzugt.

Die erfindungsgemässen längenstabilen Polyamidrohrleitungen können selbstverständlich aus mehr als drei Schichten aufgebaut sein, wenn das Prinzip der schlagzähmodifizierten Aussenschicht und mindestens einer verstärkten Schicht, vorzugsweise der Mittelschicht, zwischen Innen- und Aussenschicht(en) gewahrt und die Verträglichkeit der Schichtmaterialien gewährleistet ist.

Die erfindungsgemässen längenstabilen, mehrschichtigen Polyamidrohrleitungen werden bevorzugt durch Vereinigung von Schmelzeströmen in einem Coextrusionswerkzeug hergestellt.

Solche erfindungsgemässe, koextrudierte Polyamidrohrleitungen sind sowohl bezüglich ihrer Kälteschlagfestigkeit nach SAE J 844d, DIN 73 378 und ISO 7628 als auch bezüglich ihrer Treibstoffpermeation sowie bezüglich ihrer Längenstabilität geprüft worden.

Die Resultate der Kälteschlagprüfungen sind in Tabelle 1 wiedergegeben. Sie wurden an Rohren mit einem Aussendurchmesser von 8 mm und einer Wandstärke von 1 mm durchgeführt, deren Schichtaufbauten der Tabelle 1 entnommen werden können.

Die in der Tabelle 1 angegebenen Polyamidtypen sind:

```
GRILON     XE 3139        ein schlagzähmodifiziertes Polyamid 6

GRILAMID   XE 3148        ein schlagzähmodifiziertes Polyamid
                          12 mit Weichmacher

GRILON     PVZ 3H         ein schlagzähmodifiziertes Polyamid 6
                          mit 30 % Glasfaser

GRILAMID   LV5 H          ein schlagzähmodifikatorfreies Poly-
                          amid 12 mit 50 % Glasfaser
```

Die vorstehend angegebenen Polyamidtypen sind Handelstypen der Fa. EMS-CHEMIE AG, Zürich, Schweiz. Das gleiche gilt für

```
GRILON     T300 GM        ein schlagzähmodifikatorfreies Poly-
                          amid 6.6

GRILAMID   ELY 20 NZ      ein schlagzähmodifiziertes Polyamid-
                          elastomer

GRILON     CA 6 E         ein amorphes Copolyamid auf Basis
                          Caprolactam/Laurinlactam

GRILON     R 47 HW        ein hochviskoses, schlagzähmodifi-
                          ziertes Polyamid 6 mit definiertem
                          Weichmachergehalt

GRILAMID   L 25 W 20      ein Polyamid 12 mit definiertem
                          Weichmachergehalt

GRILAMID   L 25 W 40      ein Polyamid 12 mit definiertem

                          Weichmachergehalt
```

die zusätzlich für Vergleichsversuche gemäss den Tabellen 1 bis 5 verwendet worden sind.

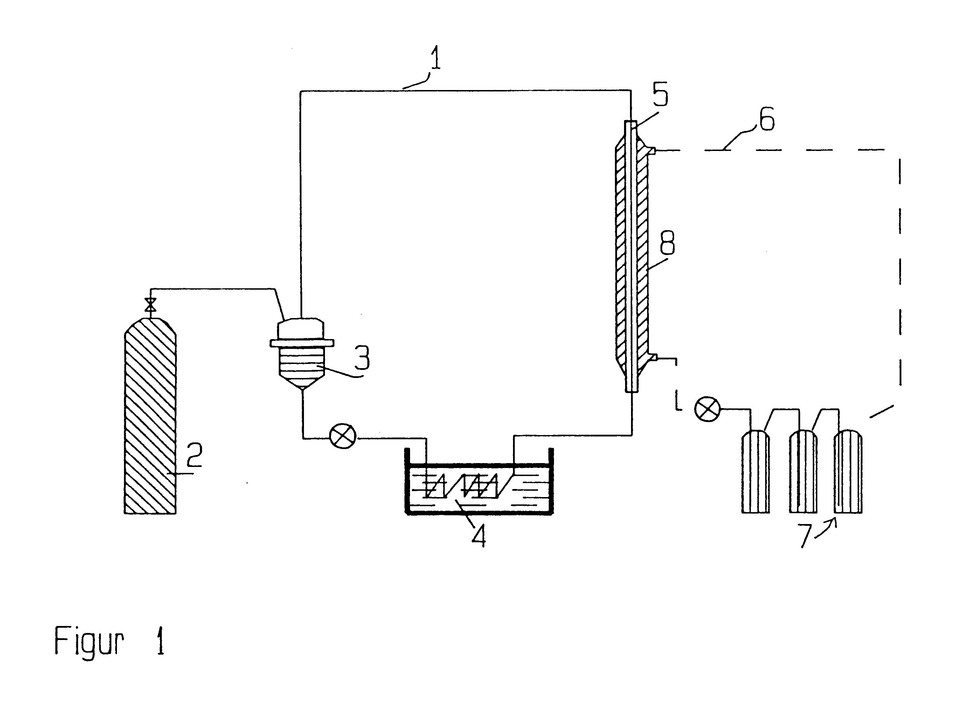

Für die Permeationsprüfungen wurde eine Anlage benutzt, deren Prinzipschema in Figur 1 wiedergegeben ist.

Gemäss der Figur 1 umfasst die Anlage einen Kraftstoffkreislauf 1, der einen Windkessel 3 enthält und durch eine Heizeinrichtung 4 und einen Rohrabschnitt 5 einer zu prüfenden Rohrleitung geführt ist. Eine Druckflasche 2 steht mit dem Windkessel 3 in Verbindung und dient dazu, in dem Kraftstoffkreislauf 1 einen Druck von 4 bar aufrechtzuerhalten. Der Kraftstoff strömt im Kraftstoffkreislauf 1 mit etwa 10 l/h und wird in der Heizeinrichtung 4 auf 70° C aufgeheizt.

Ausserdem umfasst die Anlage einen Trägerkreislauf 6, der an beiden Enden des zu prüfenden Rohrleitungsabschnittes 5 mit diesem verbunden ist. Der Trägerkreislauf 6 ist durch eine Anordnung 7 aus Aktivkohlefiltern hindurchgeführt.

Der durch die Wandung des geprüften Rohrleitungsabschnittes 5 permeierte Kraftstoff wird im Trägerkreislauf 6 mit 100 ml/min Stickstoff über die Aktivkohlefilter geleitet und dort nach 300 Stunden gewichtsmässig erfasst.

Diese Permeationsprüfungen wurden wie die Längenstabilitätsmessungen ebenfalls an Rohrleitungen mit einem Aussendurchmesser von 8 mm und einer Wandstärke von 1 mm durchgeführt.

Die Längenstabilität der erfindungsgemässen Rohre wurde durch Messung der Längenänderung von Rohrleitungsabschnitten mit einem Aussendurchmesser von 8 mm und einer Wandstärke von 1 mm beim Durchströmen mit Kraftstoff während 300 Stunden an einer Anlage ähnlich in der Figur 1 gezeigten Permeationsanlage bestimmt. Die Resultate sind Tabelle 1 zu entnehmen.

Die Ergebnisse der Permeationsprüfungen sind in den Tabellen 2 bis 4 wiedergegeben, während sich Tabelle 5 auf eine Aromatenbestimmung bezieht.

FAM ist eine Mischung aus 50 % Toluol, 30 % Isooctan, 15 % Isobuten und 5 % Ethanol.

FAM 15 in Tabelle 5 ist eine Mischung aus 85,5 % FAM, 0,5 % Wasser und 15 % Methanol.

Tabelle 1: Kälteschlagprüfungen und Längenänderungen von Rohren mit 8 mm Aussendurchmessern und 1 mm Gesamtwandstärken mit glasfaserverstärkten Mittelschichten sowie von Vergleichsrohren

| BEISPIEL | SCHICHTAUFBAU | | LÄNGEN-ÄNDERUNG | KÄLTESCHLAG MIT SCHLAGWERK | | |
|---|---|---|---|---|---|---|
| | | | | SAE J844d | DIN 73 378 | ISO 7628 |
| 1.Vergl.Bsp. Mittel-schicht unverstärkt | Grilon XE 3139<br>EVAL F<br>Grilon XE 3139 | 0,60 mm Innen<br>0,10 mm Mitte<br>0,30 mm Aussen | 1,5 % | nicht bestanden | nicht bestanden | nicht bestanden |
| 2.Vergl.Bsp. Mittel-schicht unverstärkt | Grilon XE 3139<br>Grilon T 300GM<br>Grilon XE 3139 | 0,45 mm Innen<br>0,10 mm Mitte<br>0,45 mm Aussen | 3,0 % | bestanden | bestanden | bestanden |
| 3.Vergl.Bsp. Mittel-schicht unverstärkt | Grilon XE 3139<br>Grilamid ELY20NZ 50%<br>Grilon CA 6E 50%<br>Grilamid XE 3148 | 0,60 mm Innen<br>0,20 mm Mitte<br>0,20 mm Aussen | 3,5 % | bestanden | bestanden | bestanden |
| 4.Mittel-schicht GF-verstärkt | Grilon XE 3139<br>Grilon PVZ 3H<br>Grilon XE 3139 | 0,45 mm Innen<br>0,10 mm Mitte<br>0,45 mm Aussen | 0,1 % | bestanden | bestanden | bestanden |
| 5.Mittel-schicht GF-verstärkt | Grilamid XE 3148<br>Grilamid LV 5H<br>Grilamid XE 3148 | 0,45 mm Innen<br>0,10 mm Mitte<br>0,45 mm Aussen | 0,1 % | bestanden | bestanden | bestanden |

## TREIBSTOFFPERMEATION DURCH ROHRE 8x1mm
### T-70 C  4 bar BLEIFREIES SUPERBENZIN
### +5% ETHANOL,3% METHANOL,2% ISOPROPANOL

g/m^2h

GRILON XE 3139
0.45 mm
GRILON PVZ 3H
0.10 mm
GRILON XE 3139
0.45 mm

| Grilamid L25W40 | Grilamid L25W20 | Grilon XE3139 | Grilon R47HW | GRILON |
|---|---|---|---|---|
| 10,9 | 11,6 | 7,6 | 7,4 | 3,5 |

TABELLE 2

## TREIBSTOFFPERMEATION DURCH ROHRE 8x1mm
### T-70 C  4 bar BLEIHALTIGES SUPERBENZIN

g/m^2h

GRILON XE 3139
0.45 mm
GRILON PVZ 3H
0.10 mm
GRILON XE 3139
0.45 mm

| Grilamid L25W40 | Grilamid L25W20 | Grilon XE3139 | GRILON |
|---|---|---|---|
| 1,4 | 1 | 0,6 | 0,3 |

TABELLE 3

7

## TREIBSTOFFPERMEATION DURCH ROHRE 8x1mm
### T-70 C  4 bar BLEIFREIES SUPERBENZIN

g/m^2h

GRILON XE 3139
0.45 mm
GRILON  PVZ 3H
0.10 mm
GRILON XE 3139
0.45 mm

| | | | |
|---|---|---|---|
| 1,6 | 1,7 | 0,7 | 0,3 |
| Grilamid L25W40 | Grilamid L25W20 | Grilon XE3139 | GRILON |

TABELLE 4

## TOLUOL (AROMATISCER BESTANDTEIL) GEHALT
### IN PERMEIERTEM FAM 15
### TOLUOL AUSGANGSGEHALT IN FAM 15 - 46.5%

%

GRILON 3139                              GRILAMID XE 3148

| | | | |
|---|---|---|---|
| 23 | 33 | 72 | 71 |
| 23 C | 60 C | 23 C | 60 C |

TABELLE 5

## Patentansprüche

1.  Kälteschlagzähe Polyamidrohrleitung für Kraftfahrzeuge, die kurzzeitig thermisch belastbar ist, dadurch gekennzeichnet, dass sie längenstabil ist und aus mindestens drei Schichten miteinander verträglichen Polyamidtypen besteht, wobei mindestens eine Schicht mit Glasfasern verstärkt ist.

2. Polyamidrohrleitung gemäss Anspruch 1, dadurch gekennzeichnet, dass die Mittelschicht glasfaserverstärkt ist.

3. Polyamidrohrleitung gemäss den Ansprüchen 1 und 2, dadurch gekennzeichnet, dass die drei Schichten eine Innen- und eine Aussenschicht aus schlagzähmodifiziertem Polyamid mit oder ohne Weichmachergehalt und eine glasfaserverstärkte Schicht in der Mitte der Rohrwandung aus schlagzähmodifiziertem oder schlagzähmodifikatorfreiem Homopolyamid, Copolyamid oder deren Blends sind.

4. Polyamidrohrleitung gemäss Anspruch 3, dadurch gekennzeichnet, dass die glasfaserverstärkte Mittelschicht aus Polyamid 6.6, Polyamid 6, Polyamid 11, Polyamid 12, Polyamid 12.12 oder teilaromatischem Polyamid besteht.

5. Polyamidrohrleitung gemäss Anspruch 3, dadurch gekennzeichnet, dass die glasfaserverstärkte Mittelschicht aus einem Blend aus Polyamidelastormeren, bevorzugt Polyetheresteramid und einem Copolyamid, bevorzugt aus Monomeren mit 6 und 12 C-Atomen besteht.

6. Polyamidrohrleitung nach einem der Ansprüche 1 bis 4, dadurch gekennzeichnet, dass die schlagzähmodifizierten Schichten 5 bis 30 Gewichts-% Schlagzähmodifikatoren enthalten.

7. Polyamidrohrleitung nach Anspruch 5, dadurch gekennzeichnet, dass die Schlagzähmodifikatoren funktionalisierte Homopolyolfine oder Copolyolefine sind.

8. Polyamidrohrleitung nach einem der Ansprüche 1 bis 6, dadurch gekennzeichnet, dass die glasfaserverstärkte Schicht 15 bis 30 Gewichts-% Glasfasern enthält.

9. Polyamidrohrleitung gemäss einem der Ansprüche 1 bis 8, dadurch gekennzeichnet, dass die Innen- und Aussenwandung annähernd die gleiche Dicke, bevorzugt von 0,2 bis 1,0 mm haben.

10. Polyamidrohrleitung gemäss einem der Ansprüche 1 bis 9, dadurch gekennzeichnet, dass die glasfaserverstärkte Mittelschicht eine Dicke von 5 bis 25 % der Gesamtwanddicke, bevorzugt von 0,1 bis 0,5 mm hat.

11. Polyamidrohrleitung gemäss einem der Ansprüche 1 bis 10, dadurch gekennzeichnet, dass die Innen- und die Aussenschicht aus schlagzähmodifiziertem Polyamid 12 sind und die Mittelschicht aus glasfaserverstärktem, schlagzähmodifikatorfreiem Polyamid 12 ist.

12. Polyamidrohrleitung gemäss einem der Ansprüche 1 bis 11, dadurch gekennzeichnet, dass die Innen- und die Aussenschicht aus schlagzähmodifiziertem Polyamid 6 sind und die Mittelschicht aus glasfaserverstärktem, schlagzähmodifiziertem Polyamid 6 ist.

13. Polyamidrohrleitung nach einem der Ansprüche 1 bis 12, die durch Koextrusion hergestellt worden ist.

Figur 1

EP 0 470 605 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 017 653   (BTR INDUSTRIES LTD)<br>* Spalte 1, Zeile 28 - Spalte 2, Zeile 79 *<br>– – – | 1-4,13 | F 16 L 11/08<br>F 16 L 11/12<br>B 32 B 27/18 |
| X | US-A-4 273 160   (D.C. LOWLES)<br>* Spalte 1, Zeilen 10-14; Spalte 3, Zeilen 4-46 *<br>– – – | 1-4 | |
| X | US-A-3 633 629   (T.F. RIDER)<br>* Spalte 3, Zeile 6 - Spalte 4, Zeile 75 *<br>– – – | 1-4,13 | |
| A | FR-A-2 391 409   (PARKER HANNIFIN CORP.)<br>* Spalte 1, Zeilen 6-10 *<br>– – – | 1 | |
| A | US-A-3 245 431   (J.H. COE)<br>* Spalte 2, Zeilen 51-67 *<br>– – – | 1 | |
| A | US-A-4 907 625   (ITO et al.)<br>* Patentansprüche 1-9 *<br>– – – | 1 | |
| A | US-A-3 062 241   (R.E. BRUMBACH)<br>– – – – – | | |

| | RECHERCHIERTE SACHGEBIETE (Int. Cl.5) |
|---|---|
| | F 16 L<br>B 32 B |

Der vorliegende Recherchenbericht wurde für alle Patentansprüche erstellt

| Recherchenort | Abschlußdatum der Recherche | Prüfer |
|---|---|---|
| Den Haag | 04 November 91 | ANGIUS P. |